Europäisches Patentamt

European Patent Office

Office européen des brevets

(11) Publication number : **0 493 126 A2**

(12) **EUROPEAN PATENT APPLICATION**

(21) Application number : **91312052.3**

(22) Date of filing : **27.12.91**

(51) Int. Cl.$^5$ : **H04N 1/028**, G03B 42/02, G21K 4/00

(30) Priority : **27.12.90 JP 407935/90**

(43) Date of publication of application :
**01.07.92 Bulletin 92/27**

(84) Designated Contracting States :
**DE FR GB**

(71) Applicant : **FUJITSU LIMITED**
**1015, Kamikodanaka Nakahara-ku**
**Kawasaki-shi Kanagawa 211 (JP)**

(72) Inventor : **Namiki, Fumihiro, c/o Fujitsu Limited**
**1015, Kamikodanaka, Nakahara-ku**
**Kawasaki-shi, Kanagawa 211 (JP)**
Inventor : **Takeda, Shiro, c/o Fujitsu Limited**
**1015, Kamikodanaka, Nakahara-ku**
**Kawasaki-shi, Kanagawa 211 (JP)**
Inventor : **Haraki, Takahiro, c/o Fujitsu Limited**
**1015, Kamikodanaka, Nakahara-ku**
**Kawasaki-shi, Kanagawa 211 (JP)**
Inventor : **Ishiwata, Kenji, c/o Fujitsu Limited**
**1015, Kamikodanaka, Nakahara-ku**
**Kawasaki-shi, Kanagawa 211 (JP)**

(74) Representative : **Opperman, Stuart Richard et al**
**Haseltine Lake & Co. Hazlitt House 28**
**Southampton Buildings Chancery Lane**
**London WC2A 1AT (GB)**

(54) **A radiation data image reader.**

(57) A radiation image data reader is designed such that the opening of its inlet gradually enlarges toward its outlet, and has the inlet larger than the outlet with a view to obtaining a radiation image data reader with a high light-gathering efficiency and the least possible unevenness in the light-gathering efficiency depending on the position on a scanning line. The optical receiving surface of the photoelectric converter for converting the gathered luminescent light of accelerated phosphorescence to an electrical signal is designed to be the size corresponding to the opening of the outlet of the condenser.

Fig. 3A

Fig. 3B

EP 0 493 126 A2

## Background of the Invention

The present invention relates to a radiation image data reader for reading a latent image formed on an photostimulabe phosphor and converting it to an electric signal.

## Description of the Related Arts

An X-ray photographic technology has been widely known and used for obtaining an X-ray image by emitting radiation such as x rays passing through an object to a fluorescent layer (fluorescent screen), and then emitting visible light generated on the fluorescent layer to a silver salt film. This X-ray photographic technology is widely utilized in various fields such as for medical diagnoses, etc.

Instead of recording a two-dimensional radiation image directly or indirectly on the above-described film to which silver salt photosensitive material which is used in a film/screen method is applied as a covering sheet, a digital X-ray camera is produced for practical use for obtaining image data information by emitting excitation light to an X-ray latent image formed on an accumulative luminescent substance (an photostimulabe phosphor) such as

$$(Ba_{1-x-y-p} Sr_x Ca_y EU_p^{2+}) F (Cl_{1-a-b} Br_a I_b)$$

(where x, y, p, a, and b must apply to the following expressions: $x+y+p \leqq 1$, $y \leqq 0.20$, $0.001 \leqq p \leqq 0.20$, $a+b \leqq 1$) as is disclosed in Japanese Patent Publication Tokkosho 51-28591, and then converting the emitted luminescent light of accelerated phosphorescence to an electric signal.

An photostimulabe phosphor is a substance which accumulates in its luminescent substance crystal energy received from radiation such as X rays. It accumulates this energy in a relatively stable condition, retaining the stable condition for a certain period. When the first light is emitted as excitation light to the photostimulabe phosphor in this stable condition, luminescent light of accelerated phosphorescence having an intensity corresponding to the accumulated energy is re-emitted as the second light in return. At this time, the first excitation light can have a wave length in a wide range from infrared to ultraviolet. The wave length can be determined according to the photostimulabe phosphor material to be used. Likewise, the secondary light can have a wave length in a wide range from infrared to ultraviolet. The actual wavelength depends or the luminescent substance used.

In this digital X-ray camera system, excitation light such as laser light, etc. scans data to generate luminescent light on an accelerated phosphorescent luminescent plate or sheet on which X-ray information of an object is accumulated and recorded. An electric signal can be obtained corresponding to the intensity of the accumulated radiation by gathering the luminescent light of accelerated phosphorescence with a condenser and converting it to an electric signal with a photoelectric converter. Then, the electric signal is processed to output image data which are printed on a silver salt film or displayed on the CRT.

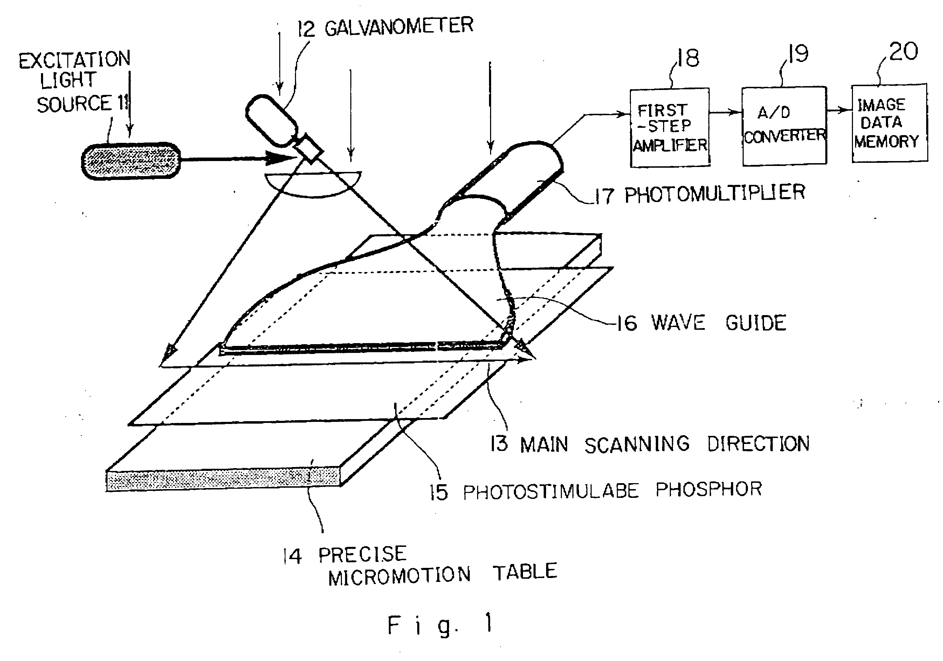

Figure 1 shows a configuration of a radiation image data reader of the prior art technology for reading a latent image on an accelerated phosphorescent luminescent material.

In Figure 1, the laser light emitted from an excitation light source 11 is operated by a galvanometer 12 to scan data in the main scanning direction 13. An photostimulabe phosphor 15 is moved orthogonally across the main scanning direction 13 by a precise micromotion table 14. The laser light is operated to scan over the photostimulabe phosphor 15. The luminescent light of accelerated phosphorescence generated by one scanning of laser light is gathered by a wave-guide line 16 comprising a bundle of optical fibers and led to a photomultiplier 17.

A filter (not shown in Figure 1) is provided between the wave-guide line 16 and the photomultiplier 17 such that the light with the wavelength of the luminescent light of accelerated phosphorescence passes through the filter, but the light with the wavelength of the excitation laser light does not. The luminescent light of accelerated phosphorescence which has selectively passed through the filter is converted to an electrical signal by the photomultiplier 17 and amplified to the optimum level of an A/D converter 19 by a first-step amplifier 18. An analog signal is converted to digital image data by the A/D converter 19, and the converted image data are stored in an image data memory 20.

In the radiation camera described above, the generated luminescent light of accelerated phosphorescence must be gathered efficiently and uniformly to be led to an photoelectric converter to obtain a desirable S/N ratio. As the luminescent light of accelerated phosphorescence is not directional but disperses in every direction, a condenser should be able to gather it at the widest possible solid angle with the least possible attenuation in the condenser or loss of return light, etc.

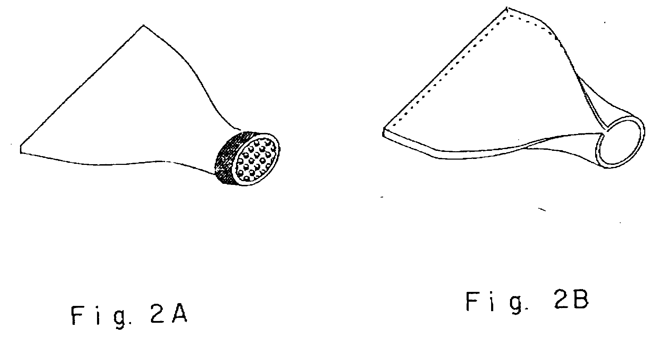

Conventionally, a bundle type condenser comprising a bundle of plastic fibers or glass fibers as shown in Figure 2A and a light-conductive sheet type condenser made of a folded-plastic panel of acrylic resin, etc. as shown in Figure 2B are used as a condenser for gathering luminescent light of accelerated phosphorescence. These condensers have a structure such that the luminescent light of accelerated phosphorescence generated linearly on the scanning line is led to a photoelectric converter having a circular photoelectric surface.

With a bundle type condenser, the solid angle at which the condenser can gather light depends on the number of openings of plastic or glass fibers. Plastic fibers and glass fibers admit a larger number of openings than quartz fibers, but they indicate a larger attenuation rate in response to the light with the wavelength of the luminescent light of accelerated phosphorescence, thereby making it hard to efficiently gather the luminescent light of accelerated phosphorescence efficiently. Besides, the uneven arrangement of fibers and the uneven permeation rate of each of a lot of fibers in use cause unevenness in the light-gathering efficiency depending on the position on a scanning line.

There are other problems such as that a light-conductive sheet type condenser can gather light at a larger solid angle than a bundle type condenser, but it indicates a larger attenuation rate in response to the light with the wavelength of luminescent light of accelerated phosphorescence than the bundle type condenser because acrylic material, for example, is used as a light-conductive line; and that the light-gathering efficiency greatly depends on the position on the scanning line because of stress generated by folding a panel and of defects in or on the acrylic panel.

## Summary of the Invention

An object of the present invention is to realize a radiation image data reader having a high light-gathering efficiency with the least possible unevenness depending on the position on the scanning line.

A feature of the present invention resides in a radiation image data reader for obtaining image data information by converting to an electric signal luminescent light of accelerated phosphorescence emitted when an accelerated phosphorescent luminescent substance that absorbs a part of the radiation passing through an object and accumulates it as a latent image is exposed to excitation light.

The radiation image data reader comprises a condenser and a photoelectric converter. The condenser having an outlet larger than an inlet through which the luminescent light of accelerated phosphorescence enters. The photoelectric converter having an optical receiving surface corresponding to the opening of the outlet of the condenser.

Because the condenser is designed such that the opening of its inlet gradually enlarges toward its outlet, the luminescent light of accelerated phosphorescence can be conducted efficiently to the photoelectric converter, thus obtaining image data having a desirable S/N ratio. Besides, since air is used as the medium for conducting the luminescent light of accelerated phosphorescence, the condenser can gather light at a large light-gathering solid angle with little unevenness of the light-gathering rate depending on the position of the medium, thus obtaining uniform image data.

## Brief Description of the Drawings

Figure 1 shows a configuration of a radiation image data reader of the prior art technology;

Figures 2A and 2B show views of a condenser of the prior art technology;

Figures 3A and 3B show views of a condenser and a photoelectric converter of an embodiment of the present invention;

Figures 4A and 4B show top and side views of a condenser and a photoelectric converter;

Figures 5A and 5B show top and side views of a condenser and a photoelectric converter of another embodiment of the present invention;

Figure 6 shows a configuration of the radiation image data reader of an embodiment of the present invention; and

Figure 7 shows a side view of the reading unit of another embodiment of the present invention.

## Description of Preferred Embodiments

### Description of the Principle

Before going into the details of actual embodiments, the underlying principle and basic construction of this invention are explained, first.

In a radiation image data reader for obtaining image data information by converting to an electric signal

luminescent light of accelerated phosphorescence emitted when an accelerated phosphorescent luminescent substance that absorbs a part of the radiation passing through an object and accumulates it as a latent image is exposed to excitation light, a condenser 1 has an outlet 3 larger than an inlet 2 through which said luminescent light of accelerated phosphorescence enters.

A photoelectric converter 4 has an optical receiving surface having an opening corresponding to the outlet 3 of the condenser 1, and converts to an electrical signal the luminescent light of accelerated phosphorescence gathered by the condenser 1.

The present invention improves the light-gathering efficiency of the condenser by admitting the luminescent light of accelerated phosphorescence at a large incident angle into the condenser 1 and by using the air as a medium for conducting the luminescent light of accelerated phosphorescence in the condenser 1. Using air as the medium reduces the unevenness of light-gathering efficiency depending on the position of a scanning line.

The condenser 1 is designed such that the opening of its inlet 2 gradually enlarges toward its outlet 3. The inner wall, made of mirrors, for example, prevents the light in the condenser 1 from reflecting repeatedly and finally returning to the inlet 2 without getting to the photoelectric converter 4, thus improving the light-gathering efficiency.

Furthermore, the optical receiving surface of the photoelectric converter 4 has an opening corresponding to the outlet 3 of the condenser 1 to admit all the luminescent light of accelerated phosphorescence arriving at the outlet 3.

Description of Actual Embodiments

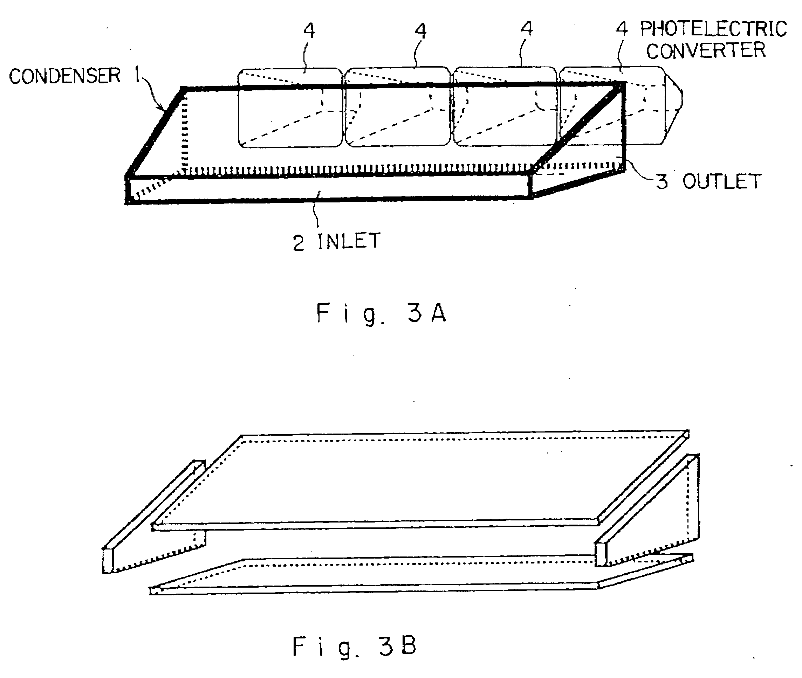

An embodiment of the present invention is described in association with the drawings. Figures 3A and 3B illustrate the structure of a condenser 1 and a photoelectrical converter 4 (e.g. photoelectrical amplifying tube) in an embodiment of the present invention.

The condenser 1 is designed such that the opening of its inlet 2 gradually enlarges toward its outlet 3 as shown in Figure 3A, and the inner wall is made of four mirrored metallic panels as shown in Figure 3B. It is obvious that the condenser 1 can be made of one plastic panel with its inner wall mirror-processed.

The rectangular inlet 2 of the condenser 1 has longer sides longer than the scanning line corresponding to the reading width on an photostimulabe phosphor, and shorter sides of about 1-30 mm long.

Four photoelectric condensers 4 each having a rectangular light-receiving surface are arranged in the direction of a scanning line. The appropriate number of photoelectric condensers arranged according to the size of the outlet 3 can work efficiently on various sizes of photostimulabe phosphor. Obviously, the condenser can comprise only one photoelectric converter.

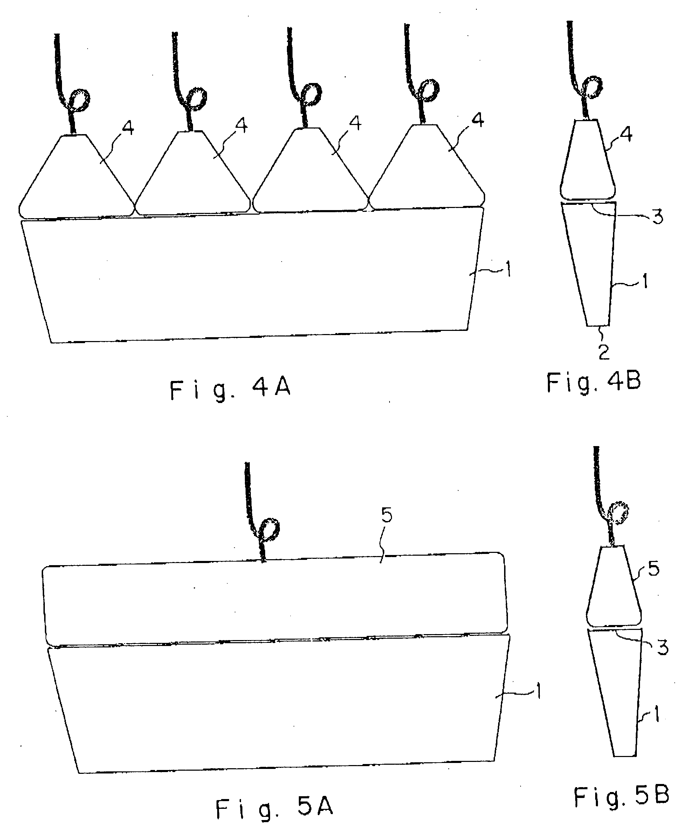

Figures 4A and 4B show top and side views of a condenser and a photoelectric converter when four photoelectric converters 4 are arranged in the direction of a scanning line.

As shown in Figures 4A and 4B, the condenser 1 is designed such that the opening of its inlet gradually enlarges toward its outlet when viewed both from top and side. Therefore, the luminescent light of accelerated phosphorescence enters the condenser 1 through the inlet 2, totally reflects repeatedly in the condenser 1, and reaches with no return light the photoelectric converter 4 on the side of the outlet 3, thus improving the light-gathering efficiency.

Furthermore, since air is used as the light-conductive medium, the inlet 2 has no optical interfaces. Thus, the luminescent light of accelerated phosphorescence in the condenser 1 is admitted at a large incident angle and a large light-gathering solid angle of the condenser 1.

A condenser can comprise only one photoelectric converter 5 having an opening corresponding to the outlet 3 of the condenser 1 as shown in Figures 5A and 5B.

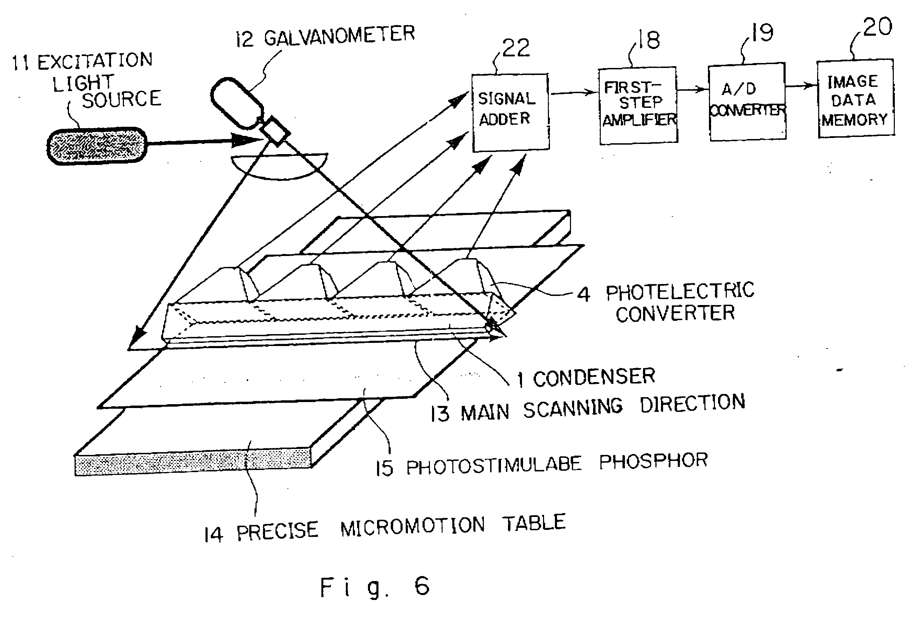

Figure 6 shows a configuration of a radiation image data reader using the above described condenser 1 and the photoelectric converter 4.

In Figure 6, the units and parts of the radiation image data reader also shown in Figure 1 of the prior art technology are assigned the numbers shown there, and their explanation of is skipped here.

In Figure 6, an excitation light source 11 is a semiconductor laser for emitting laser light with a wave length of 780mm, for example. The laser light emitted by this semiconductor laser 11 scans data using a galvanometer 12 in the main scanning direction 13 of an photostimulabe phosphor 15.

The photostimulabe phosphor 15 is moved to cross the main scanning direction 13 orthogonally. Thus, the laser light scans data all over the photostimulabe phosphor 15.

The luminescent light of accelerated phosphorescence generated by the laser light scanning is gathered by the above described condenser 1 and led to the four photoelectric converters 4. A filter is provided (not shown in Figure 6) between the converter 1 and the photoelectric converters 4 such that the light with the wavelength of the luminescent light of accelerated phosphorescence passes through the filter, but the light with the

EP 0 493 126 A2

wavelength of laser light does not. The luminescent light of accelerated phosphorescence which selectively has passed through the filter is converted to an electrical signal by the four photoelectric converters 4, and then outputted to a signal adder 22.

The signal adder 22 adds output signals of the four photoelectric converters 4 and outputs read signals for one scanning operation to the following first-step amplifier 18. The first-step amplifier 18 amplifies the read signals to the optimum signal level of an A/D converter 19. The A/D converter 19 converts them to digital image data, and then stores them in an image data memory 20. Then, the image data stored in the image data memory 20 are image-processed to be displayed on the CRT or printed on paper.

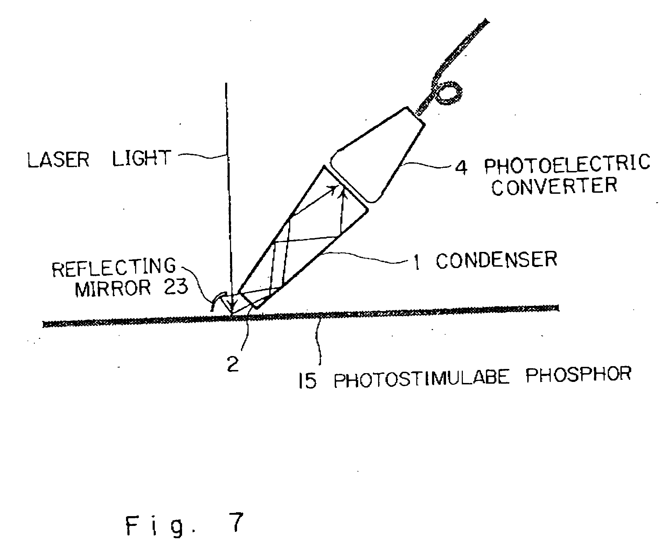

Figure 7 shows a side view of another embodiment of the present invention which is provided with a reflecting mirror 23 on the opposite side of the inlet 2 of the condenser 1.

As shown in Figure 7, a part of the luminescent light of accelerated phosphorescence generated by the scanning of the laser light enters the condenser 1 after reflecting on the reflecting mirror 23. Therefore, the luminescent light of accelerated phosphorescence which cannot enter a condenser conventionally can be admitted into the condenser 1, thereby improving the light-gathering efficiency of the condenser 1.

In the embodiment described above, the condenser 1 comprises mirror-processed metal plates inside. If it comprises wavelength-selective mirrors in the multiple film structure (dichroic surface), a higher light-gathering efficiency can be obtained by reducing the reflectance of the light with the wavelength of the laser light, and by improving the reflectance of the light with the wavelength of the luminescent light of accelerated phosphorescence.

In the present invention, the condenser is designed such that the opening of its inlet gradually enlarges toward its outlet. Therefore, the luminescent light of accelerated phosphorescence can be conducted efficiently to the photoelectric converter, thus obtaining image data having a desirable S/N ratio. Besides, as air is used as the medium for conducting the luminescent light of accelerated phosphorescence, the condenser can gather light at a large light-gathering solid angle with little unevenness of the light-gathering rate depending on the position of the medium, thus obtaining uniform image data.

## Claims

1. A radiation image data reader for obtaining image data information by converting, to an electric signal, luminescent light of accelerated phosphorescence emitted when an accelerated phosphorescent luminescent substance that absorbs a part of the radiation passing through an object and accumulates it as a latent image is exposed to excitation light, comprising:
   a condenser having an outlet larger than an inlet through which said luminescent light of accelerated phosphorescence enters; and
   a photoelectric converter having an optical receiving surface corresponding to the opening of said outlet of said condenser.

2. A radiation image data reader according to Claim 1, wherein
   said condenser has a hollow structure in which the inner surface is made of mirror walls.

3. A radiation image data reader according to Claim 1, wherein
   said photoelectric converter comprises a plurality of photoelectric amplifying tubes arranged in the scanning direction.

4. A radiation image data reader according to Claim 1, wherein
   said inlet of said condenser has longer sides longer than the scanning line and shorter than the longer sides of the optical receiving surface of said photoelectrical converter, and has shorter sides shorter than the shorter sides of the optical receiving surface of said photoelectrical converter.

5. A radiation image data reader for obtaining image data information by converting to an electric signal luminescent light of accelerated phosphorescence emitted when an photostimulabe phosphor that absorbs a part of the radiation passing through an object and accumulates it as a latent image is exposed to excitation light, comprising:
   a condenser having an outlet of said luminescent light of accelerated phosphorescence that has a greater opening than an inlet;
   a reflecting mirror facing said condenser for reflecting said luminescent light of accelerated phosphorescence toward the inlet of said condenser; and

5

a photoelectric condenser having an optical receiving surface corresponding to the opening of the outlet of said condenser.

EXCITATION LIGHT SOURCE 11

12 GALVANOMETER

18 FIRST-STEP AMPLIFIER

19 A/D CONVERTER

20 IMAGE DATA MEMORY

17 PHOTOMULTIPLIER

16 WAVE GUIDE

13 MAIN SCANNING DIRECTION

15 PHOTOSTIMULABE PHOSPHOR

14 PRECISE MICROMOTION TABLE

Fig. 1

EP 0 493 126 A2

Fig. 2B

Fig. 2A

EP 0 493 126 A2

CONDENSER 1

4 PHOTELECTRIC
CONVERTER

4    4    4

3 OUTLET

2 INLET

Fig. 3A

Fig. 3B

Fig. 4A

Fig. 4B

Fig. 5A

Fig. 5B

Fig. 6

11 EXCITATION LIGHT SOURCE

12 GALVANOMETER

22 SIGNAL ADDER

18 FIRST-STEP AMPLIFIER

19 A/D CONVERTER

20 IMAGE DATA MEMORY

4 PHOTELECTRIC CONVERTER

1 CONDENSER

13 MAIN SCANNING DIRECTION

15 PHOTOSTIMULABE PHOSPHOR

14 PRECISE MICROMOTION TABLE

EP 0 493 126 A2

EP 0 493 126 A2

LASER LIGHT

4 PHOTOELECTRIC
CONVERTER

1 CONDENSER

REFLECTING
MIRROR 23

2

15 PHOTOSTIMULABE PHOSPHOR

Fig. 7